# EUROPEAN PATENT APPLICATION

(11) **EP 3 104 267 A1**
(43) Date of publication of application: **14.12.2016**
(21) Application number: 15189874.9
(22) Date of filing: 15.10.2015
(51) Int. Cl.: G06F 3/0489, G06F 3/0488

(54) **INFORMATION-PROCESSING PROGRAM, DISPLAY CONTROL DEVICE, DISPLAY CONTROL SYSTEM, AND DISPLAY METHOD**

(30) Priority: 12.06.2015 JP 2015119549
(71) Applicant: NINTENDO CO., LTD., Minami-ku, Kyoto (JP)
(72) Inventor: YAMAMOTO, Mai, Kyoto, 601-8501 (JP); OKADA, Satoko, Kyoto, 601-8501 (JP); SAWATANI, Yuji, Kyoto, 600-8216 (JP)
(74) Representative: Karl, Christof

(57) **Abstract**

An input operation accepting unit (111) of an exemplary information-processing device (100) accepts a pointing operation input using a pointing device to indicate a coordinate of a display area of a display device. A setting unit (112) sets a first stop position for a scroll of a content, a part of the content appearing in the display area, based on a positional relationship between a start coordinate and an end coordinate of the pointing operation accepted by the input operation accepting unit (111). A scrolling unit (113) scrolls the content to the first stop position set by the setting unit (112), based on the pointing operation accepted by the input operation accepting unit (111).

## Description

### TECHNICAL FIELD

The present invention relates to a technique for scrolling a content displayed on a display device.

### RELATED ART

Scrolling is known in the art as a technique for viewing a content extending beyond a display area of a display device. For example, Japanese Unexamined Patent Application Publication No. 2000-66801 describes a mobile phone that enables a user to scroll text on a display by operating a numeric keypad. In the mobile phone an amount of scrolling increases according to a length of time for which a numeric key has been pressed.

However, the technique described in the above publication may cause a situation depending on a length of time for which a numeric key has been pressed, where words of text are partially obscured as they are beyond the boundary of a display area. Such words are hard to read for a user.

The present invention has been made in view of the above circumstances, and provides a technique to stop scrolling a screen at such a position that a display element appears at an easily-visible position.

### SUMMARY

The present invention provides an information-processing program for causing a computer to execute a process, the process comprising: accepting a pointing operation input using a pointing device to indicate a coordinate of a display area of a display device; setting a first stop position for a scroll of a content, a part of the content appearing in the display area, based on a positional relationship between a start coordinate and an end coordinate of the pointing operation; and scrolling the content to the first stop position based on the pointing operation.

The pointing device may be a touch screen.

The step of setting the first stop position may comprise: setting a second stop position for the scroll of the content based on the pointing operation; and setting the first stop position by moving the second stop position in a direction determined based on a direction of a vector from the start coordinate to the end coordinate.

The step of setting the first stop position may comprise setting the first stop position by moving the second stop position in the direction determined based on the vector, upon detecting that an amount of scroll indicated by the pointing operation fails to reach a predetermined amount.

The step of setting the first stop position may comprise setting the first stop position by moving the second stop position in a direction determined based on the pointing operation, upon detecting that the amount of scroll indicated by the pointing operation equals or exceeds the predetermined amount.

The step of scrolling the content to the first stop position may comprise scrolling the content to the first stop position after scrolling the content to the second stop position.

The step of setting the first stop position may comprise, upon detecting that scrolling the content to the second stop position causes a display element constituting the content to appear across a boundary of the display area, setting the first stop position so that a larger area of the display element is included in the display area.

The step of setting the first stop position may comprise setting the first stop position so that a part of an outer periphery of the display element comes into contact with the boundary of the display area.

The step of setting the first stop position may comprise, upon detecting that the display element appears across a part of the boundary of the display area, the part being determined based on the vector, setting the first stop position so that a larger area of the display element is included in the display area.

An array of plural display elements may constitute the content. The step of scrolling the content to the first stop position may comprise scrolling the content in a direction in which the plural display elements are arranged.

The present invention also provides a display control device, comprising: an input operation accepting unit that accepts a pointing operation input using a pointing device to indicate a coordinate of a display area of a display device; a setting unit that sets a first stop position for a scroll of a content, a part of the content appearing in the display area, based on a positional relationship between a start coordinate and an end coordinate of the pointing operation; and a scrolling unit that scrolls the content to the first stop position based on the pointing operation.

The present invention also provides a display control system, comprising: an input operation accepting unit that accepts a pointing operation input using a pointing device to indicate a coordinate of a display area of a display device; a setting unit that sets a first stop position for a scroll of a content, a part of the content appearing in the display area, based on a positional relationship between a start coordinate and an end coordinate of the pointing operation; and a scrolling unit that scrolls the content to the first stop position based on the pointing operation.

The present invention also provides a display method performed by a display control device, the method comprising: accepting a pointing operation input using a pointing device to indicate a coordinate of a display area of a display device; setting a first stop position for a scroll of a content, a part of the content appearing in the display area, based on a positional relationship between a start coordinate and an end coordinate of the pointing operation; and scrolling the content to the first stop position based on the pointing operation.

### EFFECT OF THE INVENTION

The present invention makes it possible to stop scrolling a screen at such a position that a display element appears at an easily-visible position.

### BRIEF DESCRIPTION OF THE DRAWINGS

FIG. 1 is a block diagram showing an example of a hardware configuration of information-processing device 100.
FIG. 2 is a diagram showing an example of a memory map of main memory 120.
FIG. 3 is a diagram showing an example of layout data D8.
FIG. 4 is a diagram showing an example of a display screen.
FIG. 5 is a block diagram showing an example of a configuration of functions for enabling a scroll operation.
FIG. 6 is a flowchart showing an example of a menu processing.
FIG. 7 is a flowchart showing an example of a menu processing.
FIG. 8 is a diagram showing an example of virtual space V in which content C is arranged.
FIG. 9 is a flowchart showing an example of an inertial touch-off processing.
FIG. 10 is a flowchart showing an example of a scrolling amount adjustment processing.
FIG. 11 is a flowchart showing an example of a complementary slide processing.
FIG. 12 is a diagram showing examples of layout data D8.
FIG. 13 is a diagram showing examples of a display screen.
FIG. 14 is a diagram showing examples of layout data D8.
FIG. 15 is a diagram showing examples of a display screen.
FIG. 16 is a diagram showing examples of layout data D8.
FIG. 17 is a diagram showing examples of a display screen.
FIG. 18 is a diagram showing examples of layout data D8.
FIG. 19 is a diagram showing examples of a display screen.

### DETAILED DESCRIPTION OF NON-LIMITING EXAMPLE EMBODIMENTS

### 1. Embodiment

### 1-1. Hardware Configuration

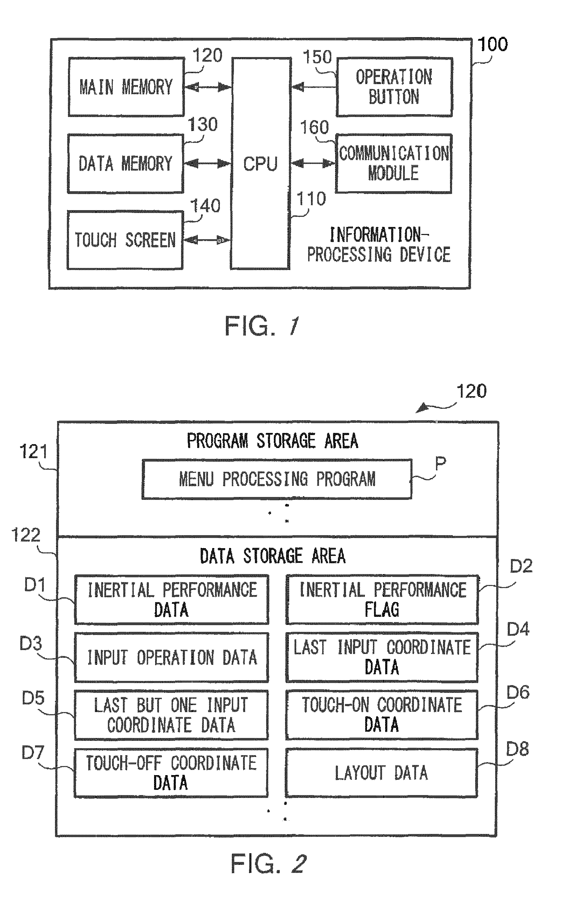

FIG. 1 is a block diagram showing an example of a hardware configuration of information-processing device 100. Information-processing device 100 is, for example, a computer device such as a smartphone, a tablet terminal, or a portable game machine. Information-processing device 100 is, alternatively, a stationary computer device. Information-processing device 100 is an example of a "display control device" according to the present invention. Information-processing device 100 includes a central processing unit (CPU) 110, main memory 120, data memory 130, touch screen 140, operation button 150, and communication module 160.

CPU 110 is a processing unit for executing a program stored in main memory 120 or data memory 130. Main memory 120 is a storage device for use as a work area or buffer area for CPU 110. Main memory 120 is, for example, a pseudo-SRAM (PSRAM).

FIG. 2 is a diagram showing an example of a memory map of main memory 120. Main memory 120 includes program storage area 121 and data storage area 122. Program storage area 121 stores programs including menu processing program P, which is used to carry out a menu processing (described later). Menu processing program P is loaded from data memory 130 to program storage area 121. Data storage area 122 stores various types of data including inertial performance data D1, inertial performance flag D2, input operation data D3, last input coordinate data D4, last but one input coordinate data D5, touch-on coordinate data D6, touch-off coordinate data D7, and layout data D8, which items of data are used in a menu processing (described later).

Inertial performance data D1 is data used in a processing for performing an inertial scrolling (described later). The processing will hereinafter be referred to as "inertial performance." Inertial performance flag D2 is a flag indicative of whether an inertial performance is in progress. An on-state of the flag indicates that an inertial performance is being currently executed.

Input operation data D3 is data indicative of a state of input to touch screen 140. Input operation data D3 includes data indicative of an input coordinate. Last input coordinate data D4 is data indicative of an input coordinate relative to touch screen 140, which has been detected in a last frame. When no input is detected in a last frame, no input coordinate is stored. On the other hand, when an input is detected, a coordinate of the input is stored. Reference to last input coordinate data D4 enables calculating parameters including a change in a touch position (or an input coordinate) of a drag operation, and an amount of movement of an indicator such as a finger or a stylus. Last but one input coordinate data D5 is data indicative of an input coordinate, which has been detected in a frame immediately prior to a frame in which last input coordinate data D4 has been detected. In other words, last but one input coordinate data D5 is data indicative of an input coordinate detected in a frame preceding a current frame by two frames.

Touch-on coordinate data D6 is data indicative of a coordinate of a position at which an indicator has come into contact with touch screen 140. Touch-off coordinate data D7 is data indicative of a coordinate of a position at which an indicator has moved away from touch screen 140.

Layout data D8 is data indicative of a layout of a screen to be displayed on touch screen 140. Touch screen 140 displays a screen according to layout data D8.

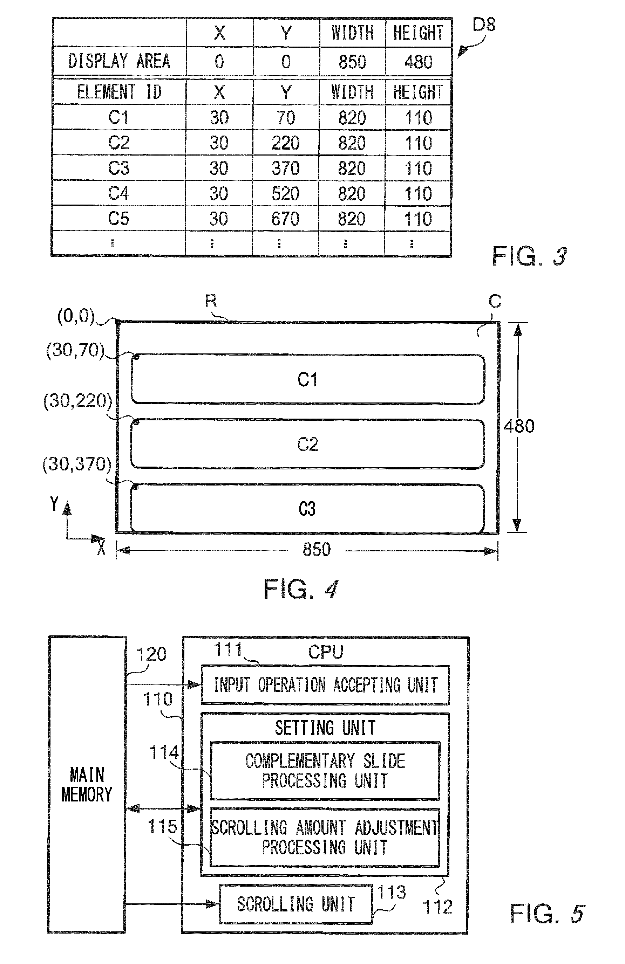

FIG. 3 is a diagram showing an example of layout data D8. FIG. 4 is a diagram showing an example of a screen to be displayed according to layout data D8 shown in FIG. 3. Layout data D8 includes data on display area R of touch screen 140, and data on content C to be displayed on touch screen 140. Data on display area R indicates an x-y coordinate (or a pixel position) of the upper left corner of display area R, a width of display area R, and a height of display area R. An x-y coordinate, a width, and a height of display area R are "(0, 0)," "850 (pixels)," and "480 (pixels)," respectively, according to the example shown in FIGS. 3 and 4. Data on content C indicates element ID of a display element constituting content C, an x-y coordinate (or a pixel position) of the upper left corner of a display element, a width of a display element, and a height of a display element. For example, an x-y coordinate, a width, and a height of display element C1 are "(30, 70)," "820 (pixels)," and "110 (pixels)," respectively, according to the example shown in FIGS. 3 and 4.

Content C is, for example, a menu screen of an application such as a game. Specifically, content C is, for example, a game stage selection screen, a possessed game item list screen, or other users list screen for a network game. Content C is, alternatively, a Web page or an electronic book content. A display element constituting content C is, for example, text or an image (specifically, a still image or a video).

The foregoing is a description of main memory 120.

Data memory 130 is a non-volatile storage device for storing programs to be executed by CPU 110, and various types of data. Data memory 130 is, for example, a flash memory or a hard disk. Data memory 130 stores menu processing program P. Data memory 130 may be detachable from information-processing device 100.

Touch screen 140 includes a display panel and a touch sensor arranged on the display panel. The display panel is a display device such as a liquid crystal display or an organic electroluminescence (EL) display. The touch sensor is, for example, a capacitive touch sensor or a resistive touch sensor. Touch screen 140 performs a process to detect a touching object at a predetermined frame rate to generate touch position data, which data is output to CPU 110 as input operation data D3. Touch position data is, for example, data indicative of a coordinate of a position at which an input has been detected on an input surface of touch screen 140. Touch screen 140 is an example of a "pointing device" according to the present invention. A pointing device as used herein refers to a device used to indicate a position (or a coordinate) on a computer screen.

Operation button 150 is a key used for input operation, such as a cross key or a push button. Operation button 150 outputs input operation data indicative of a state of input (specifically, whether it has been pressed) to CPU 110.

Communication module 160 is a communication interface such as a data communication card. Communication module 160 controls data communication with another device.

### 1-2. Functional Configuration

A functional configuration of information-processing device 100 will be described. Specifically, a configuration of functions for enabling a scroll operation performed in a menu processing (described later) will be described.

FIG. 5 is a block diagram showing an example of the configuration of functions for enabling a scroll operation. CPU 110, roughly, provides input operation accepting unit 111, setting unit 112, and scrolling unit 113 by loading menu processing program P from data memory 130 to main memory 120 to execute the program.

Input operation accepting unit 111 accepts a pointing operation using touch screen 140 to indicate a coordinate of display area R of touch screen 140. The pointing operation scrolls content C, a part of which appears in display area R. The pointing operation is, specifically, an input operation such as a drag operation or a flick operation. A drag operation as used in the present exemplary embodiment refers to an input operation to cause an indicator to touch touch screen 140 and to slide the indicator thereon in a certain direction. A flick operation as used in the present exemplary embodiment refers to an input operation to make an indicator touch on touch screen 140 and to move the indicator away from the display surface while swiping the indicator in a certain direction on the display surface. A flick operation enables a scrolling to continue for a short time even after a touch-off due to an inertial force corresponding to an intensity of the flick operation. The scrolling caused by an inertial force will hereinafter be referred to as "inertial scrolling." Input operation accepting unit 111 distinguishes between a drag operation and a flick operation by referring to items of data stored in main memory 120.

Setting unit 112 sets a first stop position for scrolling of content C. When doing so, setting unit 112 sets the first stop position based on a positional relationship between a start coordinate and an end coordinate of a pointing operation accepted by input operation accepting unit 111. Specifically, setting unit 112 initially sets a second stop position for the scrolling of content C based on the pointing operation, and moves the second stop in a direction determined based on a vector directed from the start coordinate to the end coordinate of the pointing operation to set the first stop position.

When setting the second stop position, setting unit 112 sets the second stop position based on, for example, a draft operation or a flick operation. When setting the second stop position based on a flick operation, setting unit 112 refers to input coordinates detected in frames within a predetermined time period immediately prior to a touch-off. When setting the first stop position, setting unit 112, for example, moves the second stop position in a direction determined based on the vector directed from the start coordinate to the end coordinate of the pointing operation accepted by input operation accepting unit 111. When scrolling content C vertically, setting unit 112 moves the second stop position in a direction identical to a vertical component of the vector. When scrolling content C horizontally, setting unit 112 moves the second stop position in a direction identical to a horizontal component of the vector. Setting unit 112 sets first and second stop positions by referring to items of data stored in main memory 120 to store data on the first and second stop positions in main memory 120. Setting unit 112 may omit storing data on a second stop position in main memory 120, which has been set based on a flick operation.

Setting unit 112 includes complementary slide processing unit 114 and scrolling amount adjustment processing unit 115. Complementary slide processing unit 114, upon detecting that an amount of scrolling indicated by the pointing operation accepted by input operation accepting unit 111 fails to reach a predetermined amount, sets the first stop position by moving the second stop position in a direction determined based on the vector. Specifically, complementary slide processing unit 114 sets the first stop position in such a manner when input operation accepting unit 111 has accepted a drag operation. When doing so, complementary slide processing unit 114 may ignore input coordinates detected in frames within a predetermined time period immediately prior to a touch-off of the drag operation.

Complementary slide processing unit 114, upon detecting that scrolling content C to the second stop position makes a display element constituting content C appear across the boundary of display area R, sets the first stop so that more area of the display element is included in display area R. For example, complementary slide processing unit 114 sets the first stop position so that the whole display element is included in display area R. When doing so, complementary slide processing unit 114 may set the first stop position so that a part of the outer periphery of the display element comes into contact with the boundary of display area R. Namely, complementary slide processing unit 114 may snap the display element relative to the boundary of display area R. Alternatively, complementary slide processing unit 114, upon detecting that the display element appears across a part of display area R, the part being determined based on the vector, may set the first stop position so that more area of the display element is included in display area R.

The part determined based on the vector as used herein refers to, for example, a lower side of display area R in a case where display area R has a rectangular shape, content C is vertically scrolled, and a vertical component of the vector indicates an upward direction. The part determined based on the vector refers to an upper side of display area R in a case where a vertical component of the vector indicates a downward direction. The part determined based on the vector refers to a left side of display area R in a case where content C is horizontally scrolled, and a horizontal component of the vector indicates a rightward direction. The part determined based on the vector refers to a right side of display area R in a case where a horizontal component of the vector indicates a leftward direction.

In another exemplary embodiment, complementary slide processing unit 114, upon detecting that a display element appears across a predetermined part of display area R, may set a first stop position so that a larger area of the display element is included in display area R. The predetermined part as used herein refers to, for example, an upper or lower side of display area R in a case where display area R has a rectangular shape, and content C is vertically scrolled. The predetermined part refers to a right or left side of display area R in a case where content C is horizontally scrolled.

Scrolling amount adjustment processing unit 115, upon detecting that an amount of scrolling indicated by a pointing operation accepted by input operation accepting unit 111 equals or exceeds a predetermined amount, sets a first stop position by moving a second stop position in a direction determined based on the pointing operation. Specifically, scrolling amount adjustment processing unit 115 sets a first stop position in such a manner when input operation accepting unit 111 has accepted a flick operation.

Scrolling unit 113 scrolls content C to a first stop position set by setting unit 112, based on a pointing operation accepted by input operation accepting unit 111. When doing so, scrolling unit 113, specifically, scrolls content C by referring to a coordinate value of display area R stored in main memory 120. Scrolling unit 113, in response to acceptance of a drag operation by input operation accepting unit 111, scrolls content C to a second stop position, and thereafter scrolls the content to the first stop position. Scrolling unit 113 may scroll content C, which is constituted by an array of plural display elements, in a direction in which the plural display elements are arranged. 1-3. Operation

### 1-3-1. Menu Processing

A menu processing performed in information-processing device 100 will be described.

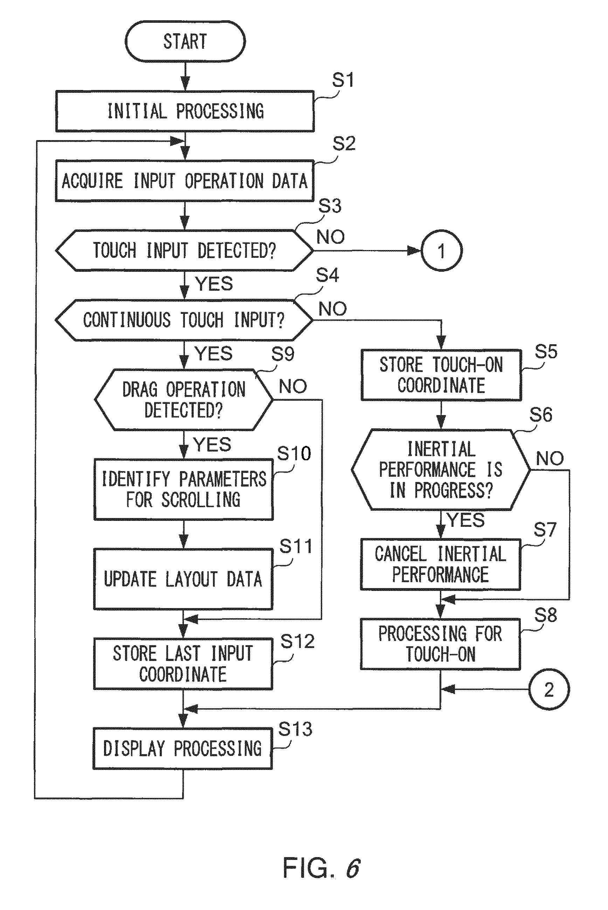

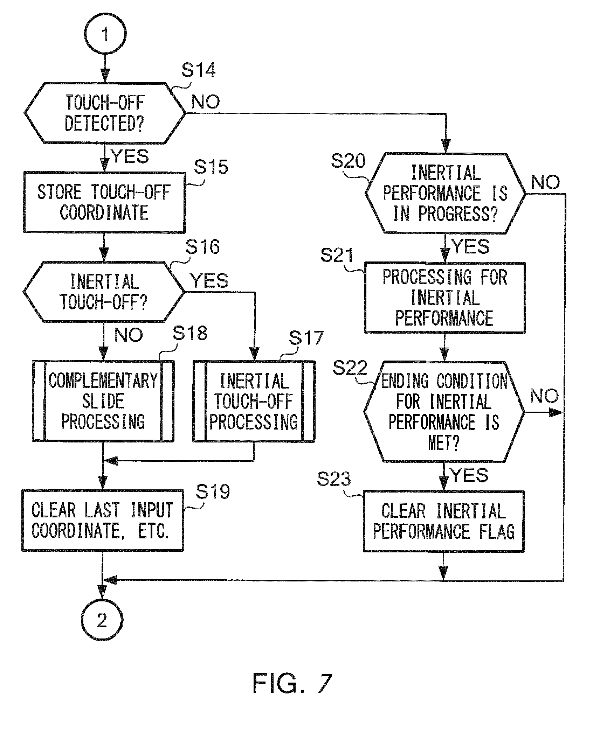

FIGS. 6 and 7 are flowcharts showing an example of the menu processing. CPU 110 of information-processing device 100, in response to an application of power, executes a boot program stored in a boot ROM (not shown) to initialize units including main memory 120. Subsequently, CPU 110 loads menu processing program P stored in data memory 130 to main memory 120 to start executing the program.

At step S1, CPU 110 initially performs an initial processing of data to be used in the following process. Specifically, CPU 110 generates and arranges content C in virtual space V.

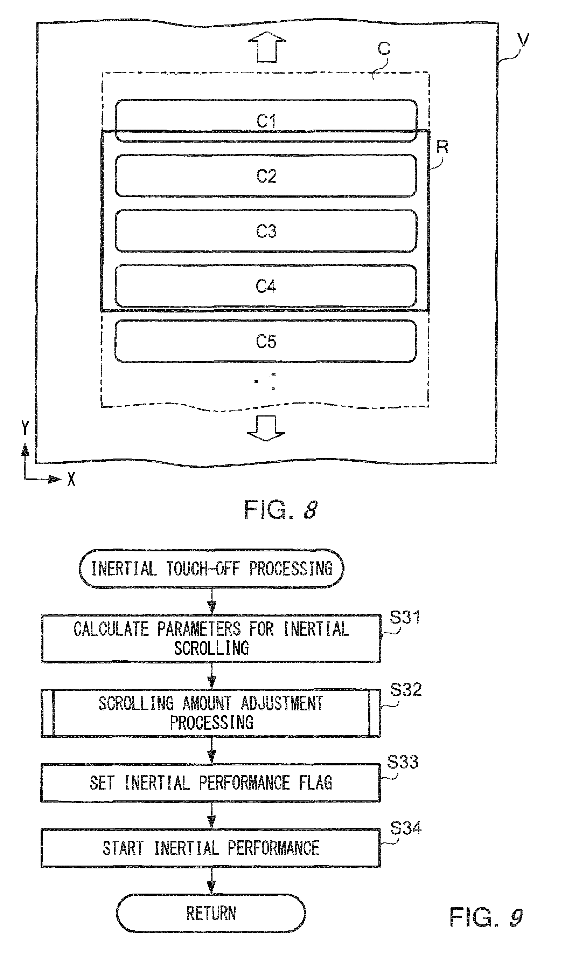

FIG. 8 is a diagram showing an example of virtual space V in which content C is arranged. Virtual space V contains a virtual camera (not shown). Touch screen 140 displays an area of content C arranged in virtual space V, an image of which has been captured by the virtual camera. The area will hereinafter be referred to as "display area R." Content C is arranged so that it is able to slide vertically relative to the virtual camera (or display area R). Sliding content C relative to the virtual camera (or display area R) enables scrolling of content C. In the following description, sliding content C in an upper direction relative to display area R refers to scrolling content C in an upper direction. Sliding content C in a downward direction relative to display area R refers to scrolling content C in a downward direction.

It is to be noted that it is possible to scroll content C by sliding the virtual camera (or display area R) vertically relative to content C, while content C remains in a fixed position. The method of a scroll processing employed in the present exemplary embodiment is merely an example; any other method may be employed. A method not using the virtual camera may be used.

Subsequent to step S1, CPU 110 proceeds with the menu processing by repeatedly performing a processing loop formed by steps S2 to S23 for each frame.

At step S2, CPU 110 acquires input operation data D3 from main memory 120. Subsequently, CPU 110 determines whether a touch input has been detected by touch screen 140 by referring to acquired input operation data D3 (step S3). When determining that a touch input has been detected (step S3: YES), CPU 110 acquires an input coordinate value of the touch input. Subsequently, CPU 110 determines whether a continuous touch input has been detected (step S4). Specifically, CPU 110 determines whether any data is set as last input coordinate data D4 in main memory 120. When determining that no continuous touch input has been detected (step S4: NO), CPU 110 stores data on the acquired input coordinate value in main memory 120 as touch-on coordinate data D6 because the detected touch input corresponds to a touch-on (step S5).

Subsequently, CPU 110 determines whether an inertial performance is in progress (step S6). Specifically, CPU 110 determines whether an inertial scrolling caused by a flick operation continues by referring to inertial performance flag D2 stored in main memory 120. When determining that an inertial performance is in progress (step S6: YES), CPU 110 performs a processing to cancel the inertial performance (step S7). When determining that no inertial performance is in progress (step S6: NO), CPU 110 skips the processing of step S7. Subsequently, CPU 110 performs a touch-on processing (step S8). Specifically, CPU 110 performs a processing according to the above input coordinate. For example, CPU 110 performs a processing to display an explanation of a display element to which the touch-on is directed. When doing so, CPU 110 may cause a pop up explanation to be displayed. Subsequently, CPU 110 proceeds to a processing of step S 13.

At step S4, when determining that a continuous touch input has been detected (step S4: YES), CPU 110 determines whether the input operation corresponds to a drag operation (or a scroll operation) (step S9). Specifically, CPU 110 determines whether an amount of change of an input coordinate determined based on input operation data D3 and last input coordinate data D4 equals or exceeds a predetermined value. The fact that the amount of change equals or exceeds the predetermined value means that a drag operation has been detected. CPU 110, when determining that the input operation corresponds to a drag operation (step S9: YES), identifies parameters necessary to scroll content C (step S10). Specifically, CPU 110 identifies a scrolling amount and a scrolling direction for content C based on an amount of change and a direction of change of an input coordinate determined based on input operation data D3 and last input coordinate data D4. Subsequently, CPU 110 updates layout data D8 based on the identified scrolling amount and scrolling direction (step S11). Specifically, CPU 110 updates a coordinate value of display area R.

At step S9, when determining that the input operation does not correspond to a drag operation; namely, that the input operation corresponds to a continuous touch on an identical position (step S9: NO), CPU 110 skips steps S10 and S11.

Subsequently, CPU 110 sets last input coordinate data D4 (step S12). Specifically, CPU 110 stores last input coordinate data D4 as last but one input coordinate data D5 in main memory 120. CPU 110 also stores, as last input coordinate data D4 in main memory 120, data indicative of the input coordinate of the touch position indicated by input operation data D3 acquired at step S2. Subsequently, CPU 110 performs a display processing (step S13). Specifically, CPU 110 generates an image with reference to layout data D8 to cause touch screen 140 to display the image. Subsequently, CPU 110 returns to step S2.

At step S3, when determining that no touch input has been detected (step S3: NO), CPU 110 determines whether the current state of an input operation corresponds to a touch-off (step S14). Specifically, CPU 110, when any data is stored as last input coordinate data D4, determines that the current state of an input operation corresponds to a touch-off, and when no data is stored as last input coordinate data D4, determines that the current state of an input operation does not correspond to a touch-off; namely, that no touch has been continuously detected. When determining that the current state of an input operation corresponds to a touch-off (step S 14: YES), CPU 110 stores data on the acquired input coordinate value in main memory 120 as touch-off coordinate data D7 (step S15).

Subsequently, CPU 110 determines whether the current state of an input operation corresponds to an inertial touch-off caused by a flick operation (step S16). Specifically, CPU 110 determines whether an amount of change of an input coordinate determined based on last input coordinate data D4 and last but one input coordinate data D5 equals or exceeds a predetermined value. The fact that the amount of change equals or exceeds the predetermined value means that an inertial touch-off caused by a flick operation has been detected. When determining that an inertial touch-off has been detected (step S16: YES), CPU 110 executes an inertial touch-off processing (step S 17), which is a processing to enable an inertial performance.

FIG. 9 is a flowchart showing an example of the inertial touch-off processing. In the processing CPU 110 initially calculates parameters necessary to perform an inertial scrolling (step S31). Specifically, CPU 110 identifies a scrolling amount (hereinafter referred to as "basic scrolling amount") and a scrolling direction based on an amount of change and a direction of change of an input coordinate determined based on last input coordinate data D4 and last but one input coordinate data D5. Subsequently, CPU 110 executes a scrolling amount adjustment processing (step S32), which is processing to perform an inertial scrolling of content C such that display elements are shown on a screen at easily visible positions.

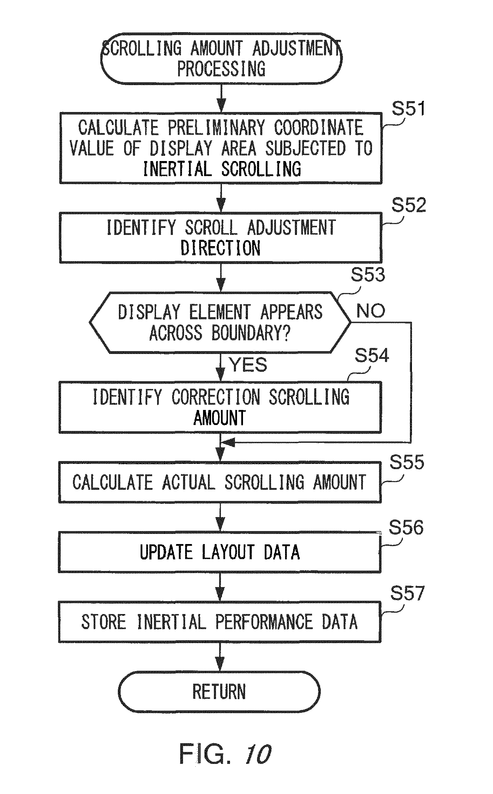

FIG. 10 is a flowchart showing an example of the scrolling amount adjustment processing. At step S51 of the process, CPU 110 calculates a preliminary coordinate value of display area R after an inertial scrolling of content C. Specifically, CPU 110 calculates a preliminary coordinate value of display area R based on the identified basic scrolling amount and scrolling direction, and layout data D8. Subsequently, CPU 110 identifies a scroll adjustment direction (step S52). Specifically, CPU 110 identifies a scroll adjustment direction based on a direction of vector directed from a touch-on coordinate to a touch-off coordinate, by referring to touch-on coordinate data D6 and touch-off coordinate data D7.

Subsequently, CPU 110 determines whether a display element would appear across the boundary of display area R after an inertial scrolling of content C (step S53). Specifically, CPU 110 determines whether a display element would appear across a part of the boundary of display area R, the part corresponding to the identified scroll adjustment direction, by referring to layout data D8. When determining that a display element would appear across the part of the boundary of display area R (step S53: YES), CPU 110 identifies the display element.

Subsequently, CPU 110 identifies a correction scrolling amount necessary to display the whole area of the identified display element within display area R (step S54). Specifically, CPU 110 identifies a correction scrolling amount based on a coordinate value of the identified display element and the calculated preliminary coordinate value of display area R, by referring to layout data D8. Subsequently, CPU 110 calculates an actual scrolling amount by adding the identified correction scrolling amount to the identified basic scrolling amount (step S55). Subsequently, CPU 110 updates layout data D8 based on the calculated actual scrolling amount and the identified scrolling direction (step S56). Specifically, CPU 110 updates a coordinate value of display area R. CPU 110 also stores data on the calculated actual scrolling amount and the identified scrolling direction in main memory 120 as inertial performance data D1 (step S57).

At step S53, when determining that no display element would appear across the part of the boundary of display area R (step S53: NO), CPU 110 identifies zero as a correction scrolling amount, and proceeds to the processing of step S55. The foregoing is a description of the scrolling amount adjustment processing.

FIG. 9 is referred to again. Subsequent to the scrolling amount adjustment processing of step S32, CPU 110 sets inertial performance flag D2 (step S33), and starts an inertial performance (step S34) to perform an inertial scrolling of content C. The foregoing is a description of the inertial touch-off processing.

FIG. 7 is referred to again. Subsequent to the inertial touch-off processing of step S 17, CPU 110 proceeds to a processing of step S 19 (described later).

At step S16, when determining that no inertial touch-off has been detected (step S16: NO); namely, that a normal touch-off not caused by a flick operation has been detected, CPU 110 executes a complementary slide processing (step S 18), which is a processing to scroll content C so that display elements shown on a screen come to an easily visible position.

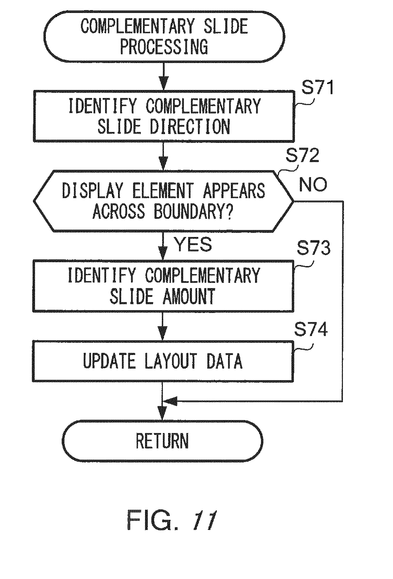

FIG. 11 is a flowchart showing an example of the complementary slide processing. At step S71 of the process, CPU 110 identifies a complementary slide direction. Specifically, CPU 110 identifies a complementary slide direction based on a direction of vector directed from a touch-on coordinate to a touch-off coordinate, by referring to touch-on coordinate data D6 and touch-off coordinate data D7. Subsequently, CPU 110 determines whether a display element appears across the boundary of display area R (step S72). Specifically, CPU 110 determines whether a display element appears across a part of the boundary of display area R, the part corresponding to the identified complementary slide direction, by referring to layout data D8. When determining that a display element appears across the part of the boundary of display area R (step S72: YES), CPU 110 identifies the display element.

Subsequently, CPU 110 identifies a complementary slide amount (step S73). Specifically, CPU 110 identifies a complementary slide amount based on a coordinate value of the identified display element and a coordinate value of display area R, by referring to layout data D8. Subsequently, CPU 110 updates layout data D8 based on the identified complementary slide direction and the identified complementary slide amount (step S74). Specifically, CPU 110 updates a coordinate value of display area R.

At step S72, when determining that no display element appears across the part of the boundary of display area R (step S72: NO), CPU 110 skips steps S73 and S74. The foregoing is a description of the complementary slide processing.

FIG. 7 is referred to again. Subsequent to the complementary slide processing of step S18, CPU 110 clears last input coordinate data D4 and last but one input coordinate data D5 in response to the touch-off operation (step S19). CPU 110 also clears touch-on coordinate data D6 and touch-off coordinate data D7. Subsequently, CPU 110 proceeds to the processing of step S13.

At step S 14, when determining that the current state of an input operation does not correspond to a touch-off; namely, that no touch on touch screen 140 by a user has been continuously detected (step S14: NO), CPU 110 determines whether an inertial performance is in progress by referring to inertial performance flag D2 (step S20). When determining that no inertial performance is in progress (step S20: NO), CPU 110 skips a processing of steps S21 to S23 (described later). On the other hand, when determining that an inertial performance is in progress (step S20: YES), CPU 110 continues a processing for inertial performance based on inertial performance data D1 (step S21).

Subsequently, CPU 110 determines whether an ending condition for the inertial performance has been met (step S22). For example, CPU 110 determines whether to end the inertial performance based on whether an inertial scrolling for an inertial scrolling amount (or an actual scrolling amount) indicated by inertial performance data D1 has been completed. Alternatively, CPU 110 determines that an ending condition for the inertial performance has been met when display area R has reached an edge of content C during an inertial scrolling. At step S22, when determining that an ending condition for the inertial performance has not been met (step S22: NO), CPU 110 skips a processing of step S23 (described later). On the other hand, when determining that an ending condition for the inertial performance has been met (step S22: YES), CPU 110 clears inertial performance flag D2 (step S23). Subsequently, CPU 110 proceeds to the processing of step S 13.

The foregoing is a description of the menu processing according to the present exemplary embodiment.

### 1-3-2. First Concrete Example of Menu Processing

A first concrete example of the menu processing described in the foregoing will be described. The present concrete example describes scrolling content C in response to a user's drag operation. The present concrete example especially describes scrolling content C in an upward direction in a screen where content C can be vertically scrolled.

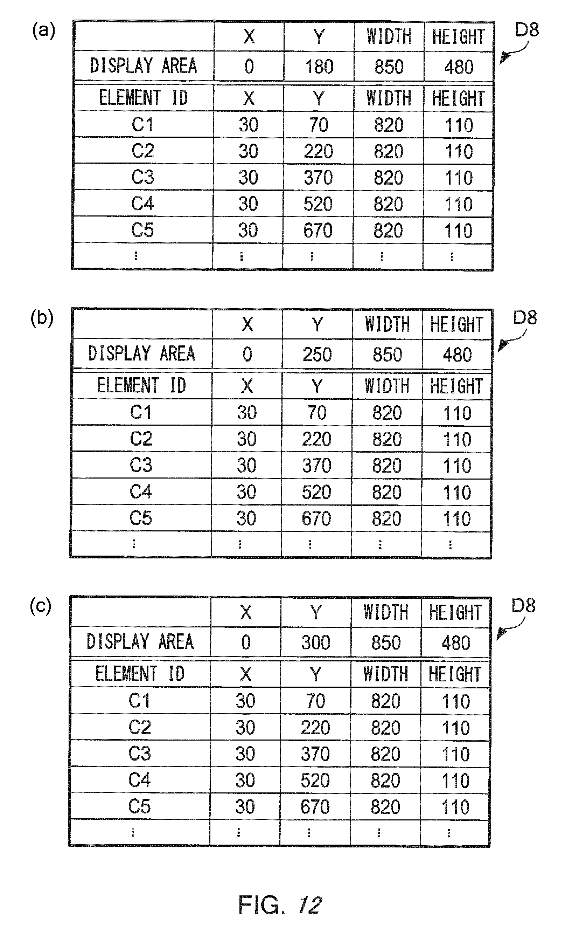

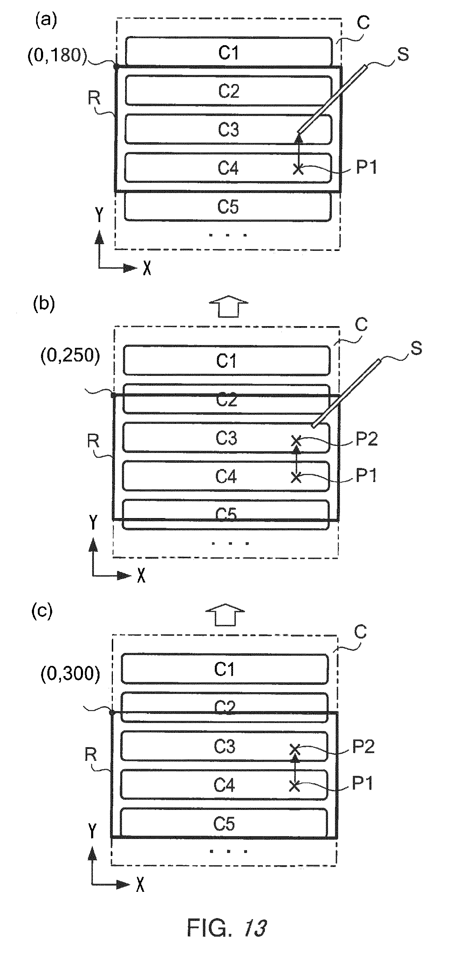

FIG. 12 is a diagram showing examples of layout data D8 stored in main memory 120 according to the present concrete example. FIG. 13 is a diagram showing examples of a screen to be displayed based on layout data D8 shown in FIG. 12. Sections (a), (b), and (c) of FIG. 13 correspond to sections (a), (b), and (c) of FIG. 12, respectively.

FIG. 13(a) shows an example of a screen to be displayed based on layout data D8 shown in FIG. 12(a). When a user touches the screen shown in FIG. 13(a) with stylus S at touch-on coordinate P1 to perform a drag operation in an upward direction, CPU 110 of information-processing device 100 identifies a scrolling direction and a scrolling amount of content C (step S10 of FIG. 6). Subsequently, CPU 110 updates a coordinate value of display area R based on the identified scrolling direction and scrolling amount (step S11). CPU 110 identifies an "upward direction" as a scrolling direction in the present example. An assumption is made that CPU 110 has identified a value "70" as a scrolling amount. CPU 110 adds the value "70" to a y-coordinate value "180" of display area R to update a coordinate value of display area R to "(0, 250)," as shown in FIG. 12(b).

FIG. 13(b) shows an example of a screen to be displayed based on updated layout data D8. The screen shows display elements C2 and C5 appearing across the boundary of display area R, which situation has been caused by scrolling content C in an upward direction in response to the upward drag operation. When the user moves stylus S away from the screen shown in FIG. 13(b) at touch-off coordinate P2, CPU 110 executes a complementary slide processing (step S 18 of FIG. 7).

In the complementary slide processing, CPU 110 initially identifies a complementary slide direction based on a direction of vector (specifically, a vertical component thereof) directed from touch-on coordinate P1 to touch-off coordinate P2 (step S71 of FIG. 11). CPU 110 identifies an "upward direction" as a complementary slide direction in the present example. Subsequently, CPU 110 identifies a display element appearing across a part of the boundary of display area R, the part corresponding to the identified complementary slide direction (step S72). For example, CPU 110 determines, for each display element, whether a display element appears across the part of the boundary by determining a range extending from a y-coordinate value to a value (a y-coordinate value plus a height) for a display element includes a y-coordinate value of the part of the boundary. The part of the boundary corresponding to the identified complementary slide direction is the lower side of display area R in the present example. CPU 110 identifies display element C5 appearing across the lower side of display area R in the present example.

Subsequently, CPU 110 identifies a complementary slide amount necessary to include the identified display element C5 within display area R (step S73). Specifically, CPU 110 identifies a complementary slide amount by subtracting a y-coordinate value of the lower side of display area R (in other words, a y-coordinate value of the upper left corner plus a height) from a value (a y-coordinate plus a height) for display element C5. CPU 110 identifies a value "50 (= (670 + 110) - (250 + 480))" as a complementary slide amount in the present example. Subsequently, CPU 110 updates a coordinate value of display area R based on the identified complementary slide direction and complementary slide amount. CPU 110 adds the value "50" to a y-coordinate "250" of display area R to update a coordinate value of display area R to "(0, 300)," as shown in FIG. 12(c), in the present example.

FIG. 13(c) shows an example of a screen to be displayed based on updated layout data D8. The screen shows display element C5, the whole area of which is included within display area R, which situation has been caused by scrolling content C in an upward direction as a result of the complementary slide process executed after the touch-off.

### 1-3-3. Second Concrete Example of Menu Processing

A second concrete example of the menu processing described in the foregoing will be described. The present concrete example differs from the first concrete example in scrolling content C in a downward direction.

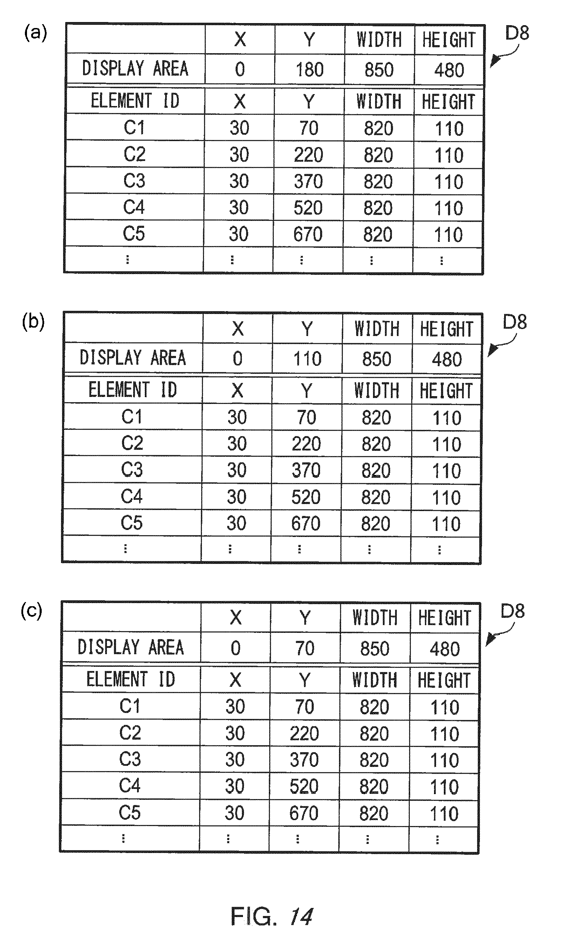

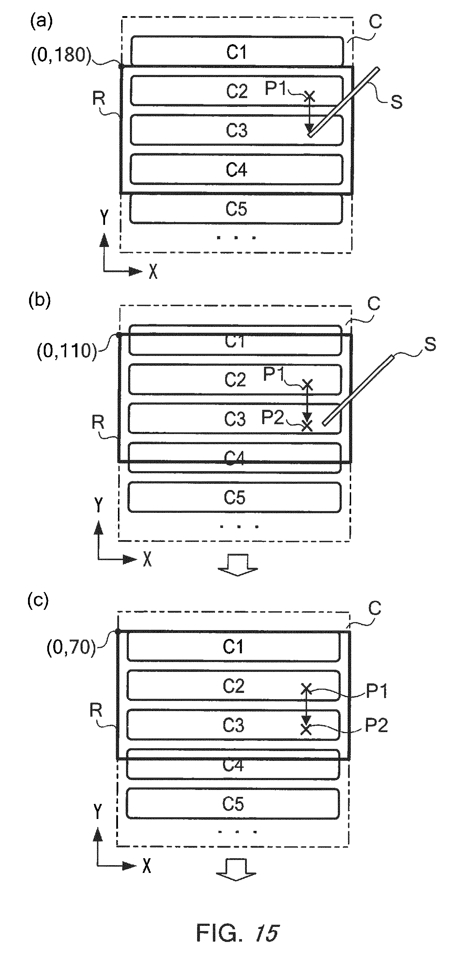

FIG. 14 is a diagram showing examples of layout data D8 stored in main memory 120 according to the present concrete example. FIG. 15 is a diagram showing examples of a screen to be displayed based on layout data D8 shown in FIG. 14. Sections (a), (b), and (c) of FIG. 15 correspond to sections (a), (b), and (c) of FIG. 14, respectively.

FIG. 15(a) shows an example of a screen to be displayed based on layout data D8 shown in FIG. 14(a). When a user touches the screen shown in FIG. 15(a) with stylus S at touch-on coordinate P1 to perform a drag operation in a downward direction, CPU 110 of information-processing device 100 identifies a scrolling direction and a scrolling amount of content C (step S10 of FIG. 6). Subsequently, CPU 110 updates a coordinate value of display area R based on the identified scrolling direction and scrolling amount (step S11). CPU 110 identifies a "downward direction" as a scrolling direction in the present example. An assumption is made that CPU 110 has identified a value "70" as a scrolling amount. CPU 110 subtracts the value "70" from a y-coordinate value "180" of display area R to update a coordinate value of display area R to "(0, 110)," as shown in FIG. 14(b).

FIG. 15(b) shows an example of a screen to be displayed based on updated layout data D8. The screen shows display elements C1 and C4 appearing across the boundary of display area R, which situation has been caused by scrolling content C in a downward direction in response to the downward drag operation. When the user moves stylus S away from the screen shown in FIG. 15(b) at touch-off coordinate P2, CPU 110 executes a complementary slide processing (step S18 of FIG 7).

In the complementary slide processing, CPU 110 initially identifies a complementary slide direction based on a direction of vector (specifically, a vertical component thereof) directed from touch-on coordinate P1 to touch-off coordinate P2 (step S71 of FIG. 11). CPU 110 identifies a "downward direction" as a complementary slide direction in the present example. Subsequently, CPU 110 identifies a display element appearing across a part of the boundary of display area R, the part corresponding to the identified complementary slide direction (step S72). For example, CPU 110 determines, for each display element, whether a display element appears across the part of the boundary by determining a range extending from a y-coordinate value to a value (a y-coordinate value plus a height) for a display element includes a y-coordinate value of the part of the boundary. The part of the boundary corresponding to the identified complementary slide direction is the upper side of display area R in the present example. CPU 110 identifies display element C1 appearing across the upper side of display area R in the present example.

Subsequently, CPU 110 identifies a complementary slide amount necessary to include the identified display element C1 within display area R (step S73). Specifically, CPU 110 identifies a complementary slide amount by subtracting a y-coordinate of display element C1 from a y-coordinate value of the upper side (in other words, a y-coordinate value of the upper left corner) of display area R. CPU 110 identifies a value "40 (= 110 - 70)" as a complementary slide amount in the present example. Subsequently, CPU 110 updates a coordinate value of display area R based on the identified complementary slide direction and complementary slide amount. CPU 110 subtracts the value "40" from a y-coordinate "110" of display area R to update a coordinate value of display area R to "(0, 70)," as shown in FIG. 14(c), in the present example.

FIG. 15(c) shows an example of a screen to be displayed based on updated layout data D8. The screen shows display element C1, the whole area of which is included within display area R, which situation has been caused by scrolling content C in a downward direction as a result of the complementary slide process executed after the touch-off.

### 1-3-4. Third Concrete Example of Menu Processing

A third concrete example of the menu processing described in the foregoing will be described. The present concrete example differs from the first concrete example in scrolling content C in response to a user's flick operation.

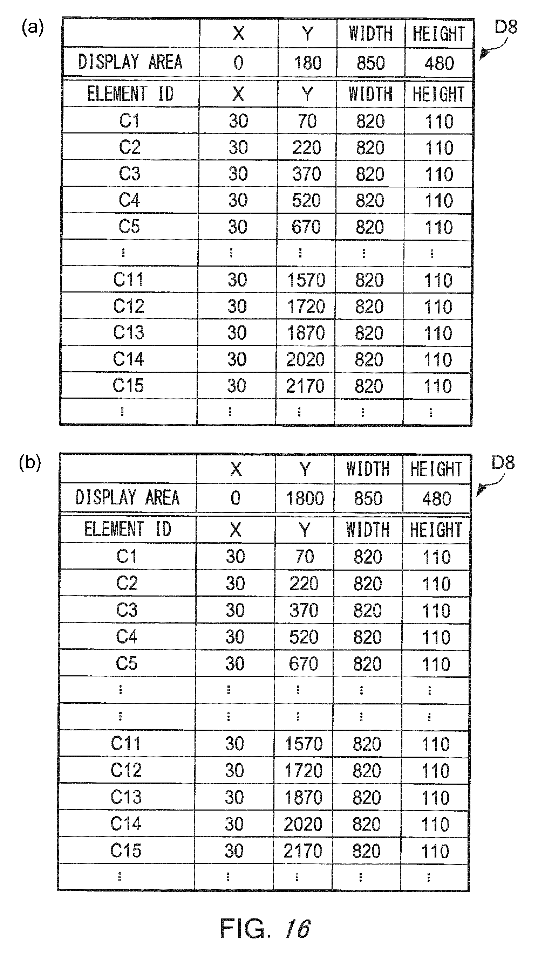

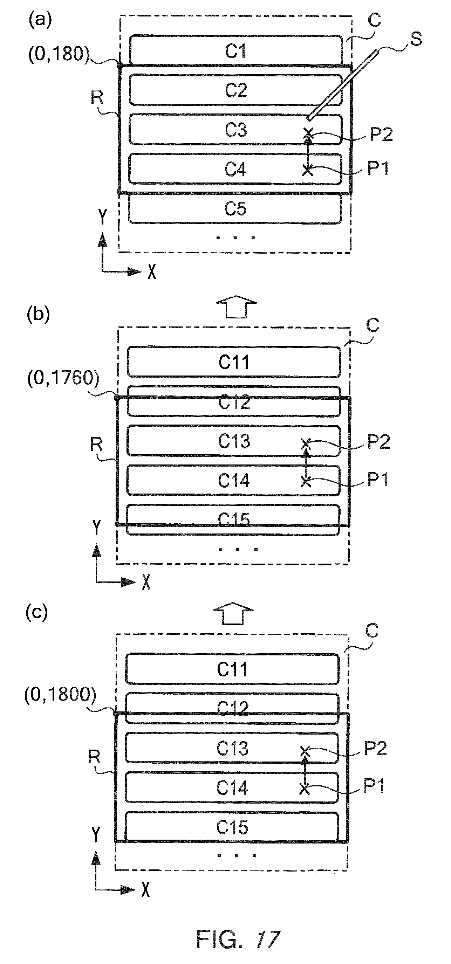

FIG. 16 is a diagram showing examples of layout data D8 stored in main memory 120 according to the present concrete example. FIG. 17 is a diagram showing examples of a display screen. FIG. 17(a) shows a screen to be displayed based on layout data D8 shown in FIG. 16(a). FIG. 17(c) shows a screen to be displayed based on layout data D8 shown in FIG. 16(b).

When a user touches the screen shown in FIG. 17(a) with stylus S at touch-on coordinate P1 to perform a flick operation in an upward direction, and moves stylus S away from the screen at touch-off coordinate P2, CPU 110 of information-processing device 100 executes an inertial touch-off processing (step S17 of FIG. 7).

In the inertial touch-off processing, CPU 110 initially identifies a basic scrolling amount and a scrolling direction of content C (step S31 of FIG. 9). CPU 110 identifies an "upward direction" as a scrolling direction in the present example. An assumption is made that CPU 110 has identified a value "1580" as a basic scrolling amount. Subsequently, CPU 110 executes a scrolling amount adjustment processing (step S32).

In the scrolling amount adjustment processing, CPU 110 calculates a preliminary coordinate value of display area R after an inertial scrolling of content C (step S51 of FIG. 10). CPU 110 adds the value "1580" to a y-coordinate value "180" of display area R to identify a coordinate value "(0, 1760)" as a preliminary coordinate value of display area R. Subsequently, CPU 110 identifies a scroll adjustment direction based on a direction of vector (specifically, a vertical component thereof) directed from touch-on coordinate P1 to touch-off coordinate P2 (step S52). CPU 110 identifies an "upward direction" as a scroll adjustment direction in the present example. Subsequently, CPU 110 identifies a display element that would appear across a part of the boundary of display area R, the part corresponding to the identified scroll adjustment direction, after an inertial scrolling of content C (step S53). For example, CPU 110 determines, for each display element, whether a display element would appear across the part of the boundary by determining a range extending from a y-coordinate value to a value (a y-coordinate value plus a height) for a display element includes a y-coordinate value of the part of the boundary.

FIG. 17(b) shows an example of a screen to be displayed based on layout data D8, layout data D8 being assumed to have been updated based on the above preliminary coordinate value of display area R. The screen shows display elements C12 and C15 appearing across the boundary of display area R, which situation is caused by performing an upward inertial scrolling of content C in response to the upward flick operation. The part of the boundary corresponding to the identified scroll adjustment direction is the lower side of display area R in the present example. CPU 110 identifies display element C15 that would appear across the lower side of display area R in the present example.

Subsequently, CPU 110 identifies a correction scrolling amount based on a coordinate value of the identified display element C15 and the calculated preliminary coordinate value of display area R (step S54). Specifically, CPU 110 identifies a correction scrolling amount by subtracting a y-coordinate value of the lower side of display area R from a value (a y-coordinate value plus a height) for display element C15. CPU 110 identifies a value "40" as a correction scrolling amount in the present example. Subsequently, CPU 110 calculates an actual scrolling amount by adding the identified correction scrolling amount to the identified basic scrolling amount (step S55). CPU 110 calculates a value "1620 (= 1580 + 40)" as an actual scrolling amount in the present example. Subsequently, CPU 110 updates a coordinate value of display area R based on the calculated actual scrolling amount and the identified scrolling direction. CPU 110 adds the value "1620" to a y-coordinate "180" of display area R to update a coordinate value of display area R to "(0, 1800)," as shown in FIG. 16(b), in the present example.

FIG. 17(c) shows an example of a screen to be displayed based on updated layout data D8 after an inertial scrolling of content C. The screen shows display element C15, the whole area of which is included within display area R, which situation has been caused by sliding the scroll stop position for content C in an upward direction as a result of the scrolling amount adjustment processing.

### 1-3-5. Fourth Concrete Example of Menu Processing

A fourth concrete example of the menu processing described in the foregoing will be described. The present concrete example differs from the third concrete example in performing a downward inertial scrolling of content C.

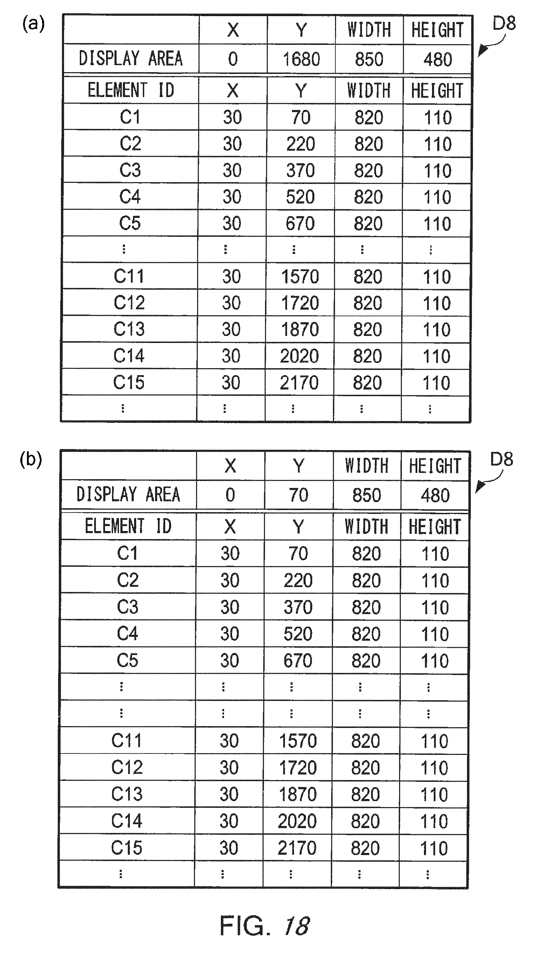

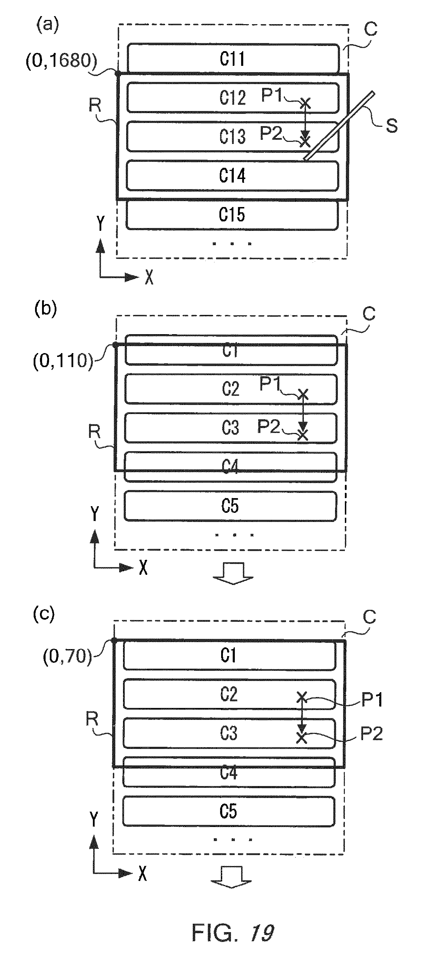

FIG. 18 is a diagram showing examples of layout data D8 stored in main memory 120 according to the present concrete example. FIG. 19 is a diagram showing examples of a display screen. FIG. 19(a) shows a screen to be displayed based on layout data D8 shown in FIG. 18(a). FIG. 19(c) shows a screen to be displayed based on layout data D8 shown in FIG. 18(b).

When a user touches the screen shown in FIG. 19(a) with stylus S at touch-on coordinate P1 to perform a flick operation in a downward direction, and moves stylus S away from the screen at touch-off coordinate P2, CPU 110 of information-processing device 100 executes an inertial touch-off processing (step S17 of FIG. 7).

In the inertial touch-off processing, CPU 110 initially identifies a basic scrolling amount and a scrolling direction of content C (step S31 of FIG. 9). CPU 110 identifies a "downward direction" as a scrolling direction in the present example. An assumption is made that CPU 110 has identified a value "1570" as a basic scrolling amount. Subsequently, CPU 110 executes a scrolling amount adjustment processing (step S32).

In the scrolling amount adjustment processing, CPU 110 calculates a preliminary coordinate value of display area R after an inertial scrolling of content C (step S51 of FIG. 10). CPU 110 subtracts the value "1570" from a y-coordinate value "1680" of display area R to identify a coordinate value "(0, 110)" as a preliminary coordinate value of display area R. Subsequently, CPU 110 identifies a scroll adjustment direction based on a direction of vector (specifically, a vertical component thereof) directed from touch-on coordinate P1 to touch-off coordinate P2 (step S52). CPU 110 identifies a "downward direction" as a scroll adjustment direction in the present example. Subsequently, CPU 110 identifies a display element that would appear across a part of the boundary of display area R, the part corresponding to the identified scroll adjustment direction, after an inertial scrolling of content C (step S53). For example, CPU 110 determines, for each display element, whether a display element would appear across the part of the boundary by determining a range extending from a y-coordinate value to a value (a y-coordinate value plus a height) for a display element includes a y-coordinate value of the part of the boundary.

FIG. 19(b) shows an example of a screen to be displayed based on layout data D8, layout data D8 being assumed to have been updated based on the above preliminary coordinate value of display area R. The screen shows display elements C1 and C4 appearing across the boundary of display area R, which situation is caused by performing a downward inertial scrolling of content C in response to the downward flick operation. The part of the boundary corresponding to the identified scroll adjustment direction is the upper side of display area R in the present example. CPU 110 identifies display element C1 that would appear across the upper side of display area R in the present example.

Subsequently, CPU 110 identifies a correction scrolling amount based on a coordinate value of the identified display element C1 and the calculated preliminary coordinate value of display area R (step S54). Specifically, CPU 110 identifies a correction scrolling amount by subtracting a y-coordinate value of display element C1 from a y-coordinate value of the upper side (in other words, a y-coordinate value of the upper left corner) of display area R. CPU 110 identifies a value "40" as a correction scrolling amount in the present example. Subsequently, CPU 110 calculates an actual scrolling amount by adding the identified correction scrolling amount to the identified basic scrolling amount (step S55). CPU 110 calculates a value "1610 (= 1570 + 40)" as an actual scrolling amount in the present example. Subsequently, CPU 110 updates a coordinate value of display area R based on the calculated actual scrolling amount and the identified scrolling direction. CPU 110 subtracts the value "1610" from a y-coordinate "1680" of display area R to update a coordinate value of display area R to "(0, 70)," as shown in FIG. 18(b), in the present example.

FIG. 19(c) shows an example of a screen to be displayed based on updated layout data D8 after an inertial scrolling of content C. The screen shows display element C1, the whole area of which is included within display area R, which situation has been caused by sliding the scroll stop position for content C in a downward direction as a result of the scrolling amount adjustment processing.

The above exemplary embodiment may be modified as described below. Any two or more of the following modifications may be combined with each other.

### 2-1. Modification 1

In the above exemplary embodiment, where a user uses touch screen 140 as a pointing device, s/he may use another pointing device such as a mouse, a pen tablet (or a graphics tablet), a touch-pad, a track-pad, or a trackball. Alternatively, a user may use a controller such as a joypad or a joystick, for use in an electronic device including a home video game machine.

### 2-2. Modification 2

In the above exemplary embodiment it is assumed that content C is scrolled vertically; however, a direction of scroll may be, for example, a horizontal direction, an oblique direction, or a depth direction. The above exemplary embodiment mainly assumes list form content C as an object to be scrolled; however, an object to be scrolled may be, for example, a map of a game such as a simulation game, or a real-world map displayed by a map application. Assuming a map as an object to be scrolled, a complementary slide processing or a scrolling amount adjustment processing according to the above exemplary embodiment adjusts a stop position for a scroll based on partition lines drawn on a map at predetermined intervals and the boundary of a display area.

### 2-3. Modification 3

In the above exemplary embodiment it is assumed that a single device achieves the above menu processing; however, plural devices that can access each other via a network may cooperate to achieve the menu processing. Namely, a display control system may achieve the menu processing.

### 2-4. Modification 4

Menu processing program P stored in information-processing device 100 may be provided to the device via a computer-readable non-transitory storage medium. A storage medium as used herein may refer to, for example, a magnetic storage medium such as a magnetic tape or a magnetic disk, an optical storage medium such as an optical disk, a magneto-optical storage medium, or a semiconductor memory. The program may be provided to information-processing device 100 via a network such as the Internet.

## Claims

1. An information-processing program for causing a computer (100) to execute a process, the process comprising:
accepting (S2) a pointing operation input using a pointing device (140) to indicate a coordinate of a display area of a display device (140);
setting (S73) a first stop position for a scroll of a content, a part of the content appearing in the display area, based on a positional relationship between a start coordinate and an end coordinate of the pointing operation; and
scrolling (S13) the content to the first stop position based on the pointing operation.

2. The information-processing program according to Claim 1, wherein the pointing device (140) is a touch screen.

3. The information-processing program according to Claim 1 or 2, wherein the step (S73) of setting the first stop position comprises:
setting (S10) a second stop position for the scroll of the content based on the pointing operation; and
setting (S73) the first stop position by moving the second stop position in a direction determined based on a direction of a vector from the start coordinate to the end coordinate.

4. The information-processing program according to Claim 3, wherein the step (S73) of setting the first stop position comprises setting the first stop position by moving the second stop position in the direction determined based on the vector, upon detecting that an amount of scroll indicated by the pointing operation fails to reach a predetermined amount.

5. The information-processing program according to Claim 4, wherein the step (S73) of setting the first stop position comprises setting the first stop position by moving the second stop position in a direction determined based on the pointing operation, upon detecting that the amount of scroll indicated by the pointing operation equals or exceeds the predetermined amount.

6. The information-processing program according to Claim 3 or 4, wherein the step (S13) of scrolling the content to the first stop position comprises scrolling the content to the first stop position after scrolling the content to the second stop position.

7. The information-processing program according to Claim 6, wherein the step (S73) of setting the first stop position comprises, upon detecting that scrolling the content to the second stop position causes a display element constituting the content to appear across a boundary of the display area, setting the first stop position so that a larger area of the display element is included in the display area.

8. The information-processing program according to Claim 7, wherein the step (S73) of setting the first stop position comprises setting the first stop position so that a part of an outer periphery of the display element comes into contact with the boundary of the display area.

9. The information-processing program according to Claim 7 or 8, wherein the step (S73) of setting the first stop position comprises, upon detecting that the display element appears across a part of the boundary of the display area, the part being determined based on the vector, setting the first stop position so that a larger area of the display element is included in the display area.

10. The information-processing program according to any one of Claims 1 to 9, wherein:
an array of plural display elements constitutes the content; and
the step (S13) of scrolling the content to the first stop position comprises scrolling the content in a direction in which the plural display elements are arranged.

11. A display control device (100), comprising:
an input operation accepting unit (111) that accepts a pointing operation input using a pointing device (140) to indicate a coordinate of a display area of a display device (140);
a setting unit (112) that sets a first stop position for a scroll of a content, a part of the content appearing in the display area, based on a positional relationship between a start coordinate and an end coordinate of the pointing operation; and
a scrolling unit (113) that scrolls the content to the first stop position based on the pointing operation.

12. A display control system (100), comprising:
an input operation accepting unit (111) that accepts a pointing operation input using a pointing device (140) to indicate a coordinate of a display area of a display device (140);
a setting unit (112) that sets a first stop position for a scroll of a content, a part of the content appearing in the display area, based on a positional relationship between a start coordinate and an end coordinate of the pointing operation; and
a scrolling unit (113) that scrolls the content to the first stop position based on the pointing operation.

13. A display method performed by a display control device (100), the method comprising:
accepting (S2) a pointing operation input using a pointing device (140) to indicate a coordinate of a display area of a display device (140);
setting (S73) a first stop position for a scroll of a content, a part of the content appearing in the display area, based on a positional relationship between a start coordinate and an end coordinate of the pointing operation; and
scrolling (S 13) the content to the first stop position based on the pointing operation.
